Europäisches Patentamt

European Patent Office

Office européen des brevets

(11) Publication number: **0 409 100 A2**

# EUROPEAN PATENT APPLICATION

(21) Application number: 90113431.2

(22) Date of filing: 13.07.90

(51) Int. Cl.5: **H04H 1/00**, H04B 1/16

(30) Priority: 19.07.89 IT 2123989

(43) Date of publication of application:
23.01.91 Bulletin 91/04

(84) Designated Contracting States:
AT BE CH DE DK ES FR GB GR LI LU NL SE

(71) Applicant: ELETTRONICA INDUSTRIALE S.p.A.
Via F. Turati 7
I-20036 Lissone (Milano)(IT)

(72) Inventor: Riccio, Italo
Via F. Turati 7
I-20035 Lissone (Milan)(IT)

(74) Representative: Modiano, Guido et al
MODIANO, JOSIF, PISANTY & STAUB
Modiano & Associati Via Meravigli, 16 16 16
I-20123 Milano(IT)

(54) Process for radio-broadcasting and detecting a video signal with at least two associated audio signals, for the modulation and separate use of at least one of said audio signals, and related demodulation device.

(57) The process comprises the step of providing a modulated carrier video signal (2) and at least a first audio signal (4) and a second audio signal (5); the combining of the video signal and of the first and second audio signals in a combiner-multiplexer (3) so as to obtain a combined video-audio signal; the radio-broadcasting of the combined video-audio signal; the demodulation of the combined video-audio signal (8,10,11,12) so as to extract therefrom at least the second audio signal in a separate demodulated form (13); and the use of the second audio signal in dedicated user means (14,15).

Fig. 1

Fig. 3

# PROCESS FOR RADIO-BROADCASTING AND DETECTING A VIDEO SIGNAL WITH AT LEAST TWO ASSOCIATED AUDIO SIGNALS, FOR THE MODULATION AND SEPARATE USE OF AT LEAST ONE OF SAID AUDIO SIGNALS, AND RELATED DEMODULATION DEVICE

The present invention relates to a process for radio-broadcasting and detecting a video signal with which at least two audio signals are associated, for the demodulation and separate use of at least one of said audio signals, and also relates, in a further aspect, to a converter demodulation device for performing the step of extracting the audio sub-carrier or the separate audio signal of said process.

As is known, currently there are substantially no more available radio-broadcasting channels, since the FM frequency bands from 88 to 108 associated with radio broadcasts are already all assigned and are furthermore extremely crowded.

The aim of the present invention is to facilitate radio-broadcasting for public and private services by providing a new radio-broadcasting process which allows to transmit at least one modulated audio signal specifically provided for being demodulated in conventional radio receivers, using an ordinary video signal as carrier signal.

Within the scope of this aim, an important object of the present invention is to provide a radio-broadcasting process which uses, as carrier video signal, a conventional AM-VSSB modulated video signal at 38.9 MHz converted to the VHF-UHF frequency band which corresponds to the A-B, C, D-H2 channels and to the channels 21 to 81.

Another object of the present invention is to provide a new radio-broadcasting process the operative steps whereof can be performed by circuit means which are commonly commercially available and/or can be easily designed specifically.

Another object of the present invention is to be able to transmit, with the relatively high transmission power associated with a conventional video band, an audio signal which can be demodulated directly by dedicated demodulation means for the specific feeding of car radios.

Another object of the present invention is to provide a demodulation device which is extremely simple and functional, can be manufactured with conventional circuitry and can be easily associated with a car radio and/or with a portable radio receiver and/or the like to demodulate a high-power audio signal which is substantially unaffected by external disturbances, using the process according to the invention.

Not least object of the present invention is to provide a radio-broadcasting process and a dedicated demodulation device which are extremely reliable and in particular do not give rise to undesirable intermodulation phenomena.

According to an aspect of the present invention, the above aim and objects, as well as others which may possibly become apparent hereinafter, are achieved by a radio-broadcasting process which has the characteristics indicated in claims 1 to 8.

The aim and objects of the present invention are furthermore achieved by a demodulation device specifically provided for performing the demodulation step of the process according to the invention which has the peculiarities indicated in claims 9 to 13.

Further characteristics and advantages of the process for radio-broadcasting and detecting video signals with which at least two audio signals are associated, for demodulating and separately using at least one of said audio signals, and of the demodulation device for the execution of said process, will become apparent hereinafter from the following detailed description of a possible and currently preferred embodiment thereof, illustrated only by way of non-limitative example in the accompanying drawings, wherein:

figure 1 is a general schematic block diagram of a possible radio-broadcasting system which performs the process according to the present invention;

figure 2 is a series of diagrams useful for understanding the operating methods of the radio-broadcasting process according to the invention; and

figure 3 is a possible schematic block diagram of a demodulation device, according to a peculiar aspect of the invention, for the execution of the process according to the invention.

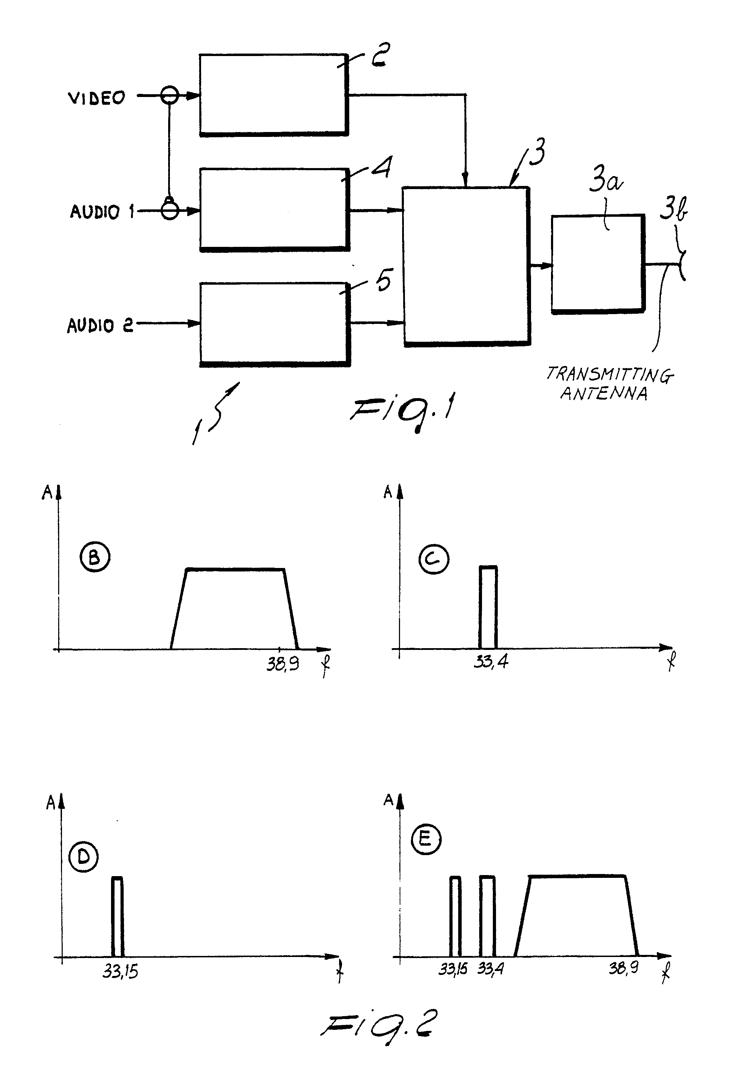

With more specific reference now to the above figures, and in particular to figure 1, in said figure the radio-broadcasting system according to the invention has been generally indicated by the reference numeral 1.

In particular, said system or apparatus comprises a conventional AM-VSSB 38.9 MHz modulation block, generally indicated by the reference numeral 2; the carrier video signal is fed to the input of said modulation block and, in the embodiment specifically described herein, is an ordinary video signal within the UHF frequency band comprised between 470 and 860 MHz, i.e. in the video channels 21 to 69. The output of the modulation block 2 is applied to an input of a combiner-multiplexer block generally indicated by the reference numeral 3.

Another input of the combiner-multiplexer block 3 receives the output of a further block 4, specifically a 33.4 MHz FM modulation block, to the input whereof a first audio signal is applied.

A further input of the combiner-multiplexer block 3 instead receives the output of a last block 5, which is also constituted by a 33.15 MHz modulation block, to the input whereof a second audio signal is applied.

In particular, the first audio signal can be the conventional audio signal intended for the audio section of a conventional television receiver, whereas the second audio signal, according to the invention, is provided so as to be separated, during demodulation (and as will become apparent hereinafter) from the carrier video signal for direct use in a dedicated radio receiver such as a car radio and/or a portable radio and/or the like.

As can be seen, the output of the combiner-multiplexer block 3 consists of a conventional transmitter 3a, for example a UHF one, with an associated transmission antenna 3b.

Said transmission antenna, in particular, is a conventional system for the transmission of video signals and of audio channels which use the video band as carrier, and as such the transmission is markedly better and has a very high power with respect to conventional radio- broadcasting antennae, and furthermore has the great advantage of being substantially unaffected by external disturbances.

The diagrams shown in figure 2 clearly illustrate the operating method of the process according to the invention.

More specifically, diagram B illustrates the spectrum of the video carrier, diagram C illustrates the spectrum of the first audio signal, diagram D illustrates the spectrum of the second audio signal, which is the audio signal which, according to the invention, must be demodulated separately, whereas diagram E illustrates the spectrum which is the sum of the total signal, i.e. the signal radio-broadcast by the transmission antenna.

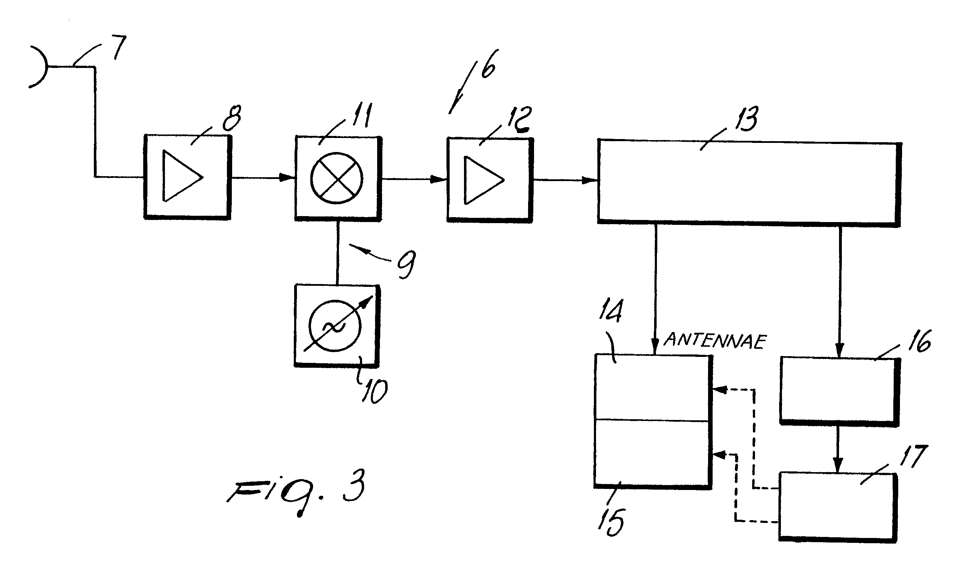

With reference now to figure 3, said figure is a general diagram of a possible demodulation unit for the demodulation and specific separation of said second audio signal.

In particular, said demodulation unit, which is generally indicated by the reference numeral 6, comprises a reception antenna 7, first amplifier means 8, a mixer-converter assembly, generally indicated by the reference numeral 9, which specifically comprises a programmable oscillator 10 which is circuitally interconnected to a true mixer assembly 11, a second amplifier block 12 and, according to the invention, a demodulation block 13 suitable for converting the carrier video signal in the II band, i.e. substantially in the band between 88 and 108 MHz, and for selectively demodulating only the audio signal 2.

The audio signal 2, which substantially coincides with a conventional FM signal in said band between 88 and 108 MHz, can thus be received directly by a car radio 14 or by a portable radio or the like 15, after, as mentioned, demodulation in the blocks 16 and in the further audio processing block 17.

The audio signal 2 furthermore contains a coded information which identifies the transmitting station and can be recognized by the receiver. The receiver, whether car radio or portable radio, has a system for the automatic search of the radiofrequency channel which uses the described identification code.

In this manner the user can, by selecting the station, be assured that the reception of the same station will be maintained even during trips between different locations, by means of the identification of the code which corresponds to the selected station.

The above description is deemed to be sufficient to clearly explain the operation of the process and of the demodulation unit according to the invention.

On this subject, the fact is specifically pointed out that though the association of two audio signals with a video signal, for example for stereo TV reception, is known, in this application the two audio signals are both used in the TV set, and the use of a separate audio signal for feeding separate devices, independently of the video information, is not at all provided for.

On this subject, the Applicant furthermore wishes to call attention to the fact that the second audio signal may also be taken directly from a conventional TV monitor to feed, for example, radio-recorder devices and/or the like with an audio channel which has very high fidelity and immunity from disturbance and is completely separated from the currently radio-broadcast radio channels.

From the above it can be seen that the invention fully achieves the intended aim and objects. Though the invention has been described with specific reference to a currently preferred embodiment thereof, it should be understood that said embodiment is susceptible to numerous modifications and variations, all of which are within the scope of the inventive concept as defined in the accompanying claims.

For example, the mentioned frequency values may be specifically chosen according to the contingent requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for radio-broadcasting and detecting a video signal with which at least two audio signals are associated, for demodulating and separately using at least one of said audio signals, and related demodulation device, characterized in that it comprises the steps which consist in:

a) providing a modulated carrier video signal and at least a first audio signal and a second audio signal;

b) combining said modulated carrier video signal and said at least first and second audio signals in combiner-multiplexer means, so as to obtain a combined video-audio signal;

c) radio-broadcasting of said combined video-audio signal;

d) demodulating said combined video-audio signal to obtain therefrom at least said second audio signal in a separate demodulated form; and

f) using said second audio signal in dedicated user means.

2. Process according to claim 1, characterized in that said video signal is an AM-VSSB modulated video signal at 38.9 MHz, said first audio signal being an audio signal modulated at 33.4 MHz and said second audio signal being an audio signal modulated at 33.15 MHz.

3. Process according to the preceding claims, characterized in that said video signal is preferably any one of the video signals within the frequency band comprised between 470 and 860 MHz (TV channels 21 to 69).

4. Process according to any one of the preceding claims, characterized in that in said demodulation step d) said video signal is converted in a frequency band of substantially 88-108 MHz and at least said second audio signal is demodulated therefrom.

5. Process according to any one of the preceding claims, characterized in that said dedicated user means are constituted by a car radio.

6. Process according to any one of the preceding claims, characterized in that said dedicated user means are constituted by a portable radio and/or the like.

7. Process according to any one of the preceding claims, characterized in that in said step b) of said process it is possible to insert, in said second audio channel, a code for identifying the transmitting station.

8. Process according to any one of the preceding claims, characterized in that in said step d) of said process said identification code is extracted from said second audio channel for identification in said dedicated user means.

9. Demodulation device for executing step d) of the process according to any one of the preceding claims, for demodulating said video signal, characterized in that it comprises, circuitally cascade interconnected:

a) receiver antenna means suitable for receiving said carrier video signal and said first and second audio signals carried thereby;

b) first selective antenna amplifier means;

+

c) converter-mixer means suitable for converting said video signal into a preset frequency band which is substantially different from its transmission band; and

d) second selective amplifier means suitable for amplifying said preset frequency band.

10. Device according to claim 9, characterized in that said converter-mixer means comprise programmable oscillator means.

11. Device according to claim 9, characterized in that said preset frequency band is Band II, substantially from 88 to 108 MHz.

12. Car radio set comprising a demodulation device according to claims 8 to 10.

13. Portable radio set comprising a demodulation device according to claims 8 to 10.

Fig.1

Fig.2

EP 0 409 100 A2

ANTENNAE

Fig. 3

6